# EUROPEAN PATENT SPECIFICATION

(11) **EP 4 548 428 B1**
(45) Date of publication and mention of the grant of the patent: **25.11.2026**
(21) Application number: 23739330.1
(22) Date of filing: 28.06.2023
(51) Int. Cl.: H01Q 1/28, H01Q 19/02, H01Q 21/06, H01Q 21/20, H04B 7/185, H01Q 21/28

(54) **AN ANTENNA ASSEMBLY AND AN ANTENNA ARRAY COMPRISING THE SAME**
ANTENNENANORDNUNG UND ANTENNENANORDNUNG DAMIT
ENSEMBLE ANTENNE ET RÉSEAU D'ANTENNES LE COMPRENANT

(30) Priority: 28.06.2022 GB 202209474
(43) Date of publication of application: 07.05.2025
(73) Proprietor: Avealto Ltd, London EC1M 4BH (GB)
(72) Inventor: GARDELLINI, Carlos Gustavo, 1050 Ixelles (BE); LAURICH, Matthias, Owings Mills, Maryland 21117 (US); SWIFT, Simon, Hereford and Worcester HR2 9NE (GB)
(74) Representative: Forresters IP LLP
(86) International application number: PCT/GB2023/051686
(87) International publication number: WO 2024/003547

(56) References cited:
- JP-A- H10 126 146
- US-A1- 2008 136 553
- US-A1- 2012 019 423
- US-A1- 2020 106 518
- US-A1- 2021 083 382
- US-A1- 2022 011 143
- KARAPANTAZIS S ET AL: "Broadband communications via high-altitude platforms: a survey", IEEE COMMUNICATIONS SURVEYS & TUTORIALS, IEEE, USA, vol. 7, no. 1, 1 January 2005 (2005-01-01), pages 2 - 31, XP011290928, ISSN: 1553-877X

## Description

The present disclosure relates to an antenna assembly. In particular to an antenna assembly for use in a high-altitude pseudo satellite communications system.

The world is undergoing an extraordinary technological revolution in satellite and high-altitude communications. A dramatic increase in broadband capacity across the globe, spurred by new technologies, is bringing the promise of reliable and affordable broadband connectivity to the hardest-to-reach corners of the Earth.

However, it is apparent that new technologies are required to enable new capabilities and applications in areas already connected to the global network, and to help drive down access costs for many people. Over 3 billion people do not have access to the Internet today and are essentially cut off from modern society and all the benefits of health, education, equality and financial stability and advancement that it can bring.

Due to their coverage, reliability, mobility, and flexibility, increasing consideration is being given to space-based technologies as a means of expanding the reach and density of the global Internet.

To date, however, no commercially viable solution has been implemented to allow for sufficiently widespread use.

Geosynchronous Orbit Satellites (GEOSats) orbit directly over the equator at an altitude of around 36,000 kilometers (22,000 miles). Their orbital speed allows them to remain over the exact same position as the earth turns. This allows a ground-based antenna to be fixed in position to send and receive radio signals to and from the satellite. A GEOSat now costs over US $350M to build and launch into geosynchronous orbit, with launch failures a constant risk. Most GEOSATs have an on orbit lifetime of around 12 years. GEOSats cannot be serviced or upgraded while on station. Due to the orbital distance from earth, a GEOSat signal will have a very high latency or propagation delay. This is highly noticeable on voice calls transmitted by satellite. This 500 millisecond (½ second) delay also reduces the effectiveness of error correction for data transmissions which can severely limit the capacity of Internet bandwidth.

Low Earth Orbit Satellites (LEOSats) travel in orbit closer to the earth. To maintain orbit they must travel at a higher speed and change their position relative to the ground very quickly. A LEOSat requires less signal strength to send a radio signal to the earth since it is orbiting closer to the earth than a GEOSat, however LEOSats support much less bandwidth than GEOSats. Moreover, a large number of LEOSats are needed to provide complete coverage so that one is always overhead. Current examples include Iridium and Globalstar, which each operate a constellation of LEOSats. Each LEOSat spends a large part of its orbit over areas where there are few or no potential users and can only provide a very small amount of bandwidth per satellite. More sophisticated LEOSats for telecom are being developed, but the cost of these networks will be many billions of dollars.

High Altitude Platform (HAP) vehicles are known, which fly above currently controlled airspace at an altitude at or above 20 km. These aircraft may be airplanes or airships and may be manned or unmanned. HAP vehicles are much lower in cost as compared to GEOSats and LEOSats. However, to date, no appropriate solution based on the use of HAP vehicles has been proposed. In particular no solution that is capable of operating to mimic GEOSats.

Prior art arrangements are known from JP H10 126146, US 2021/019423, US 2008/136553, US 2022/011143, US 2021/083382, KARAPANTAZIS S ET AL: "Broadband communications via high-altitude platforms: a survey", IEEE COMMUNICATIONS SURVEYS & TUTORUALS, IEEE, USA, vo. 7, no. 1, and US 2020/106518.

The present invention arose from work to provide an improved communications system that could be implemented in a cost-effective manner and address the shortcomings of the prior art. From lengthy and diligent research and development it was established that the implementation of such an improved communications system required the development of a unique antenna, capable of transmitting on the satellite wavelengths but at a much lower level.

Representative features are set out in the following clauses, which stand alone or may be combined, in any combination, with one or more features disclosed in the text and/or drawings of the specification.

According to the present invention in a first aspect, there is provided a communications system as defined by Claim 1.

The deflector substantially surrounds the patch antenna. The deflector may project from the plane of the patch antenna to an open mouth. The antenna may be substantially closed other than the open mouth.

The patch antenna is a low-profile antenna, which is substantially planar in form. It may be surface mountable. It is preferably fabricated on a printed circuit board or other substrate. The patch antenna may comprise an array of patches. The patch antenna may comprise a via-fed patch array antenna.

The use of a patch antenna allows for the transmission/receipt of signals on the same frequencies as GEOSats. The unique addition of the deflector allows for the use of such an antenna at far lower heights that GEOSats, whilst avoiding interference. The unique antenna design thereby allows for the provision of a HAP vehicle that may mimic a GEOSat for relayed communications with conventional satellite ground stations. Providing a unique low cost alternative to GEOSats.

The antenna assembly is most preferably configured to receive and/or transmit signals in one or more of the Kᵤ band, the Kₐ band, the C band, the K band, or the X band, and will be configured appropriately. It is most preferably configured for receiving and/or transmitting signals in the Kᵤ band.

The vehicle preferably comprises a communications payload configured to transmit signals at a predetermined power level, such that when the signal reaches the receiver on the ground it has a power level equivalent to that of a signal received from a Geosynchronous Orbit Satellite.

This signal strength matching with GEOSats has several benefits. The signal is not of a strength to overpower signals from such satellites. Moreover, the ground station receives signals without distinction between signals received from GEOSats, LEOSats, or the vehicle of the present invention.

The communications payload may comprise a conventional geosynchronous orbit satellite transponder, appropriately configured to suit its use in the vehicle taking into account the desired operating height, and appropriate receipt and transmission frequencies and powers for mimicking of a 'bent-pipe' geosynchronous orbit satellite transponder at ground level.

The communications payload may comprise a converter which is arranged to change the frequency of received signals to a different frequency for onward transmission by the communications payload.

Such a converter may be beneficial for avoiding interference between received and transmitted signals and/or for mimicking the signal processing of a GEOSat.

The communications payload may be configured to receive a signal at a first power level and to transmit the signal at a second power level that is lower than the first power level.

Since the received signal is travelling a far shorter distance to reach the vehicle than an equivalent signal received by GEOSats, the received signal at the vehicle has a greater signal strength. Accordingly, the communications payload may be arranged to transmit a signal at a reduced strength to the received signal, whilst matching the signal strength at the ground level of the transmitted signal of GEOSats at ground level.

Further, preferred, features are presented in the dependent claims.

Non-limiting embodiments of the invention will now be discussed with reference to the following drawings:
Figure 1 shows a perspective view of an antenna assembly;
Figure 2 shows a top view of the antenna assembly of Figure 1;
Figure 3 shows a side view of the antenna assembly of Figure 1;
Figure 4 shows a rear view of the antenna assembly of Figure 1;
Figure 5 shows a perspective view of an array of the antenna assemblies of Figure 1;
Figure 6 shows a plan view of the array of Figure 5;
Figure 7 is a perspective view of an airship;
Figure 8 shows an exemplary avionics system architecture for the airship of Figure 7; and
Figure 9 shows a schematic view of the airship comprising an antenna array mounted thereto via a three-axis gimbal, wherein the schematic is not to scale.

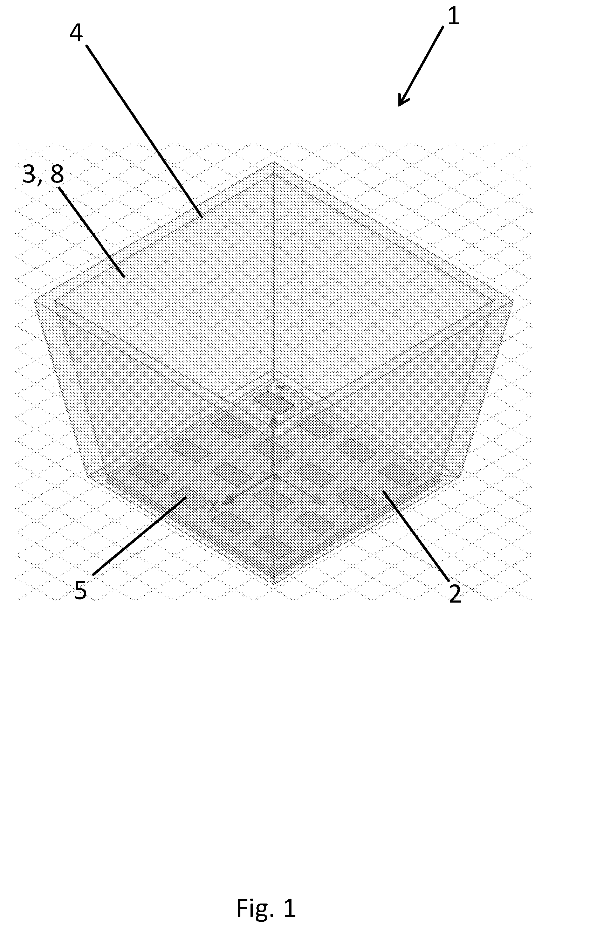

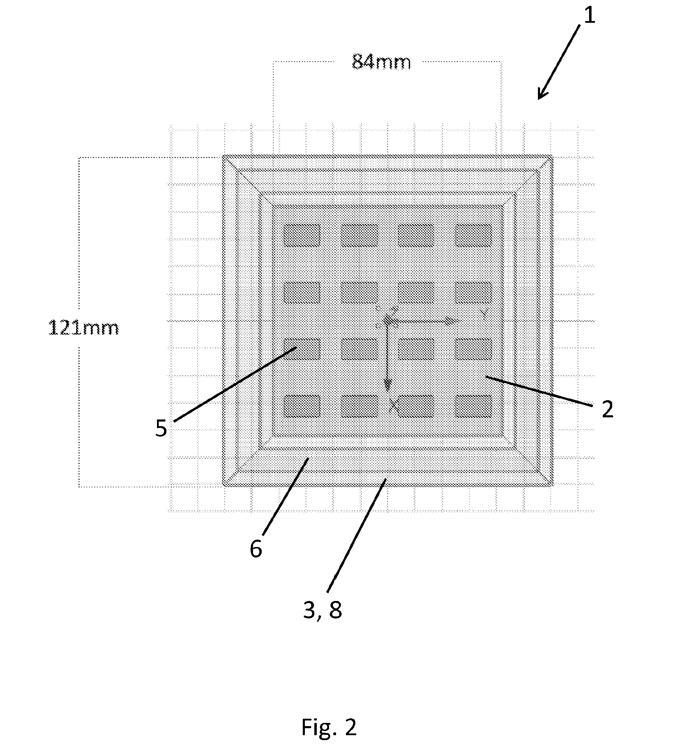

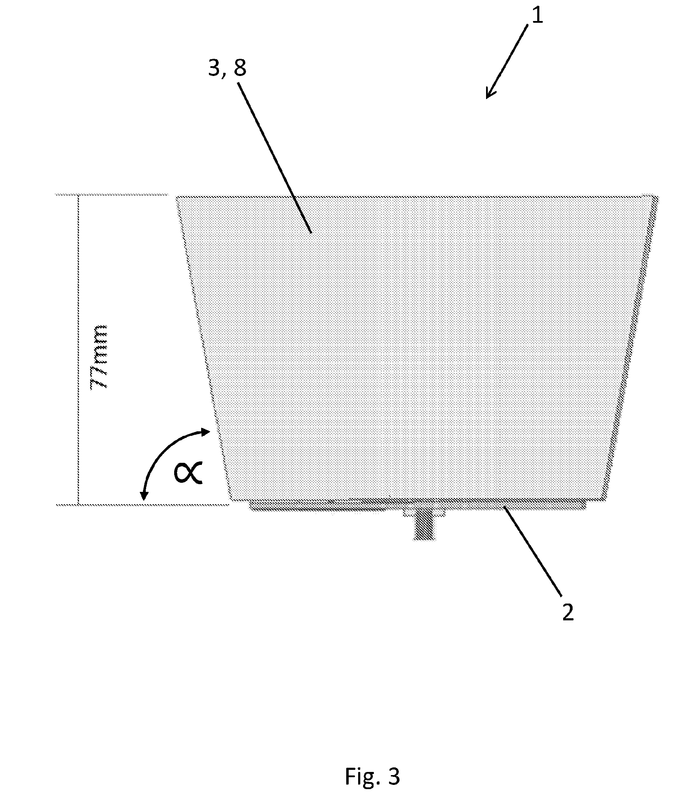

With reference to figures 1 to 4, there is shown an antenna assembly 1 comprising a patch antenna 2 and a deflector 3. As shown, the deflector 3 projects from a plane of the patch antenna 2. In the present arrangement, the deflector 3 surrounds the patch antenna 2, i.e. surrounds an area of the antenna 2 comprising any/all patches 5. It projects from the plane of the patch antenna to an open mouth 4 defined by the deflector 3.

As discussed, the patch antenna 2 is a low-profile antenna, which is substantially planar in form. It may be surface mountable. It is preferably fabricated on a printed circuited board, as shown. It may be otherwise manufactured and mounted on an alternative substrate. The patch antenna preferably comprises an array of patches 5. The patch antenna 2 in the depicted arrangement comprises a via-fed patch array antenna. In the present arrangement, a 4 by 4 array of patches is provided. As will be readily appreciated, however, alternative arrays may be implemented, which may comprise more or less patches 5. The 4 by 4 array is not limiting.

The deflector may be supported by and/or attached to the printed circuit board or substrate, as is the case in the present arrangement.

The patch antenna is preferably configured for receiving and/or transmitting signals in one or more of the Kᵤ band, the Kₐ band, the C band, the K band, or the X band, most preferably in the Kᵤ band.

The antenna assembly 1 is preferably substantially closed other than the open mouth. It is most preferably entirely closed other than the open mouth as in the depicted arrangement, with a continuous inner surface 6 extending between the patch antenna 2 and the open mouth.

The deflector may extend around the entire periphery of an area comprising any or all of the patches 5. In the present arrangement, as is preferred, the deflector extends around the entire periphery of the printed circuit board or substrate on which the patch antenna is fabricated. There may be a seal provided between the deflector and the printed circuit board, or substrate, which may be formed by adhesive.

By the antenna assembly being entirely closed other than the open mouth, it is meant that the arrangement is such that any signals transmitted from the patch antenna can only leave the antenna assembly through the mouth, and any signals received by the patch antenna can only enter the antenna assembly through the mouth.

In alternative arrangements, however, the deflector may not be substantially closed. For example, gaps may be provided between adjacent sidewalls that together define the deflector, or one or more sidewalls may be omitted, or provided at a different angle to adjacent sidewalls.

The deflector most preferably comprises one or more sidewalls 8. The sidewalls may be considered to define petals. With gaps between the sidewalls, or one or more sidewalls omitted, one or more or all of the petals may be spaced from one another. With a closed arrangement, the petals may abut one another or be joined to one another either directly or indirectly.

In the present arrangement the patch antenna has a substantially square profile with four antenna elements (or patches) and four sides. Here the profile is formed by bounding the smallest area containing all of the patches 5 with straight lines. It has sides of identical length. Such an arrangement is preferred but it should be appreciated that the profile of the patch antenna may take numerous other forms. It may have more or less sides, which may have the same length as one another or different lengths to one another. The sides could be square or curved. The profile of the patch antenna could have an entirely curved profile. The deflector may be adapted in accordance with the profile of the patch antenna. It may follow all or a portion of the profile.

It should be noted that the profile of the substrate may follow the profile of the patch antenna. Edges of the substrate could lie on the edges of the profile. However, the edges of the substrate will typically be spaced outwards therefrom, as in the depicted arrangement, such that the substrate has a larger surface area than a profile of the patch antenna thereon.

In the present arrangement, with a four-sided patch antenna, the deflector is formed by four sidewalls (or petals) 8. The sidewalls are preferably closed/solid and are preferably joined to one another along their adjacent edges to provide a continuous closed inner surface around the entire periphery of the patch antenna. Each of the sidewalls has a basal edge that is substantially the same length as a respective one of the side edges of the patch antenna that it extends along.

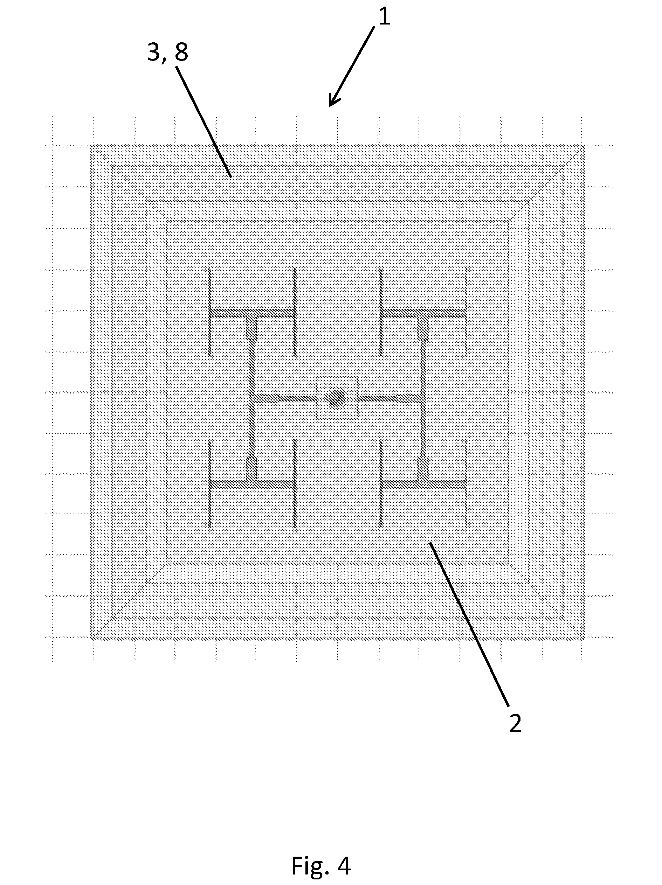

It is preferable that the deflector tapers from the periphery of the patch antenna. When there is an open mouth, the deflector preferably tapers out to the open mouth . By such an arrangement, the mouth has a larger surface area than the profile of the patch antenna. In the present arrangement, the taper α is best seen in Figures 1 and 4. The taper may be continuous or may vary. It is preferably continuous as in the present arrangement. The sidewalls are preferably straight between the periphery of the patch antenna and the open mouth. They could alternatively be curved or bent.

In the present arrangement, the sidewalls are all arranged at the same orientation as one another, however, this need not be the case. In some arrangements one or more of the sidewalls may be arranged at a different orientation to one or more of the other sidewalls. By way of non-limiting example, one sidewall could taper at a different angle to the remaining sidewalls, or all of the sidewalls could taper at different angles to one another.

The sidewalls may further be arranged such that one or more of the sidewalls has a different form to the remaining sidewalls, i.e. curved or bent versus straight, continuous taper versus variable taper, combinations of these alternatives, or otherwise.

Numerous alternatives/combinations within the variations considered above, and/or based on other possibilities, will be envisaged by those skilled in the art, wherein the specific arrangement implemented will be based on the specific operational requirements for a given deployment, as discussed further below.

The present invention is not to be limited to any particular arrangement.

It is preferred that the deflector is of fixed form. By such an arrangement, the taper/sidewall angle/orientation and form will be fixed. Such an arrangement allows for a very lightweight construction. The sidewalls will have their form and orientation set in dependence on the location in which the antenna is to be deployed. The deflector will reduce the antenna sidelobe gain at angles where interference with GEOSats may occur due to deployment location. The orientation may be set in dependence on the anticipated interference in any particular deployment location. Put differently, the antenna will be configured for use in a specific deployment location.

In the present arrangement, the angle of taper α of all the walls is 64 degrees. As noted above, the form and orientation of the sidewalls will be set in dependence on operational requirements in correspondence with a specific deployment. The taper of any one or more of the sidewalls may be anywhere from 0 degrees (i.e. one or more of the sidewalls may be parallel to the plane of the patch antenna) to 135 degrees (i.e. one or more or the sidewalls may taper inwards by up to 45 degrees). The sidewalls will typically taper at an angle of between 30 and 70 degrees. The taper (and form) of any of the sidewalls may be varied as required.

In alternative arrangements, the sidewalls may be reconfigurable. For example, the sidewalls may be mounted on actuators for altering the taper of the deflector. Suitable flexible or articulating joints may be provided between adjacent sidewalls to avoid gaps opening between sidewalls with movement of the sidewalls, however, these may not be necessary. With such an arrangement it would be possible to alter the deflectors remotely, i.e. during deployment for the purpose of fine tuning.

The size of the patch antenna is not particularly limited. It will be configured in dependence on operational requirements. However, it may have a surface area of 150X150 mm² or less, preferably 100x100 mm² or less, and most preferably 90x90 mm² or less. Note that for other operational bands, the patch antenna dimensions are expected to be larger or smaller than existing preferred dimensions. The patch antenna will be adapted to operational requirements, as will be readily appreciated by those skilled in the art.

Again, whilst not particularly limited in size, and also dependent on operational requirements, the deflector may project from the patch antenna, in a direction perpendicular to a plane of the patch antenna by up to 150mm or less, preferably 100mm or less, most preferably 80mm or less. It should be noted that where the deflector comprises a plurality of sidewalls one or more of the sidewalls may project by a different distance to one or more of the other sidewalls, or all sidewalls may project by the same distance. Note that for other operational bands, the deflector dimensions are expected to be larger or smaller than existing preferred dimensions. The deflector will be adapted to operational requirements, as discussed above, and will be readily appreciated by those skilled in the art.

As will be appreciated by those skilled in the art, the deflector may be formed from a range of materials. The material of the deflector may itself be reflective to signals in one or more of the Kᵤ band, the Kₐ band, the C band, the K band, or the X band, or the inner surface 6 of the deflector may be coated with a suitably reflective material. Any arrangement that is effective for reducing the antenna sidelobe gain at angles where interference with GEOSats may occur due to deployment location of the antenna may be implemented, as will be readily appreciated by those skilled in the art. By way of non-limiting example, the deflector, or any sidewalls (or petals) thereof, may be formed by 3-D printing with a conductive material, 3-D printing with an absorptive material, 3-D printing and applying a conductive or absorptive material to a surface of the print, joining together substrates, which may comprise PCBs by soldering or otherwise, metal forming, by folding or otherwise, forming from a foam/substrate laminate with or without a reflective or absorptive coating applied thereto.

The deflector may be unitarily formed or may be formed from a number of separate parts.

The antenna assembly 1 comprises one of a number of antenna devices arranged in an array. Most preferably a first plurality of the antenna assemblies of the array will be configured to transmit signals and a second plurality of the antenna assemblies of the array will be configured to receive signals. The numbers of antenna assemblies in the array and their configuration may be varied in dependence on the specific configuration of those assemblies and the operational requirements.

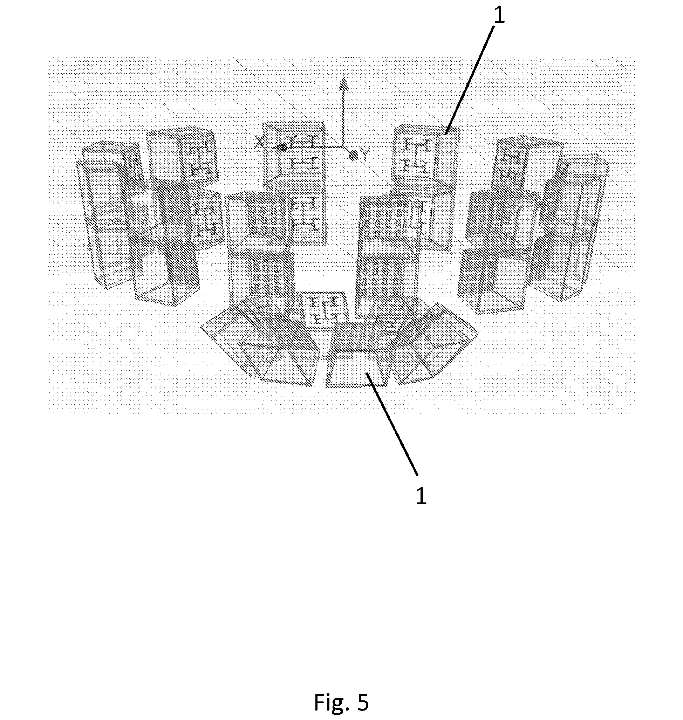

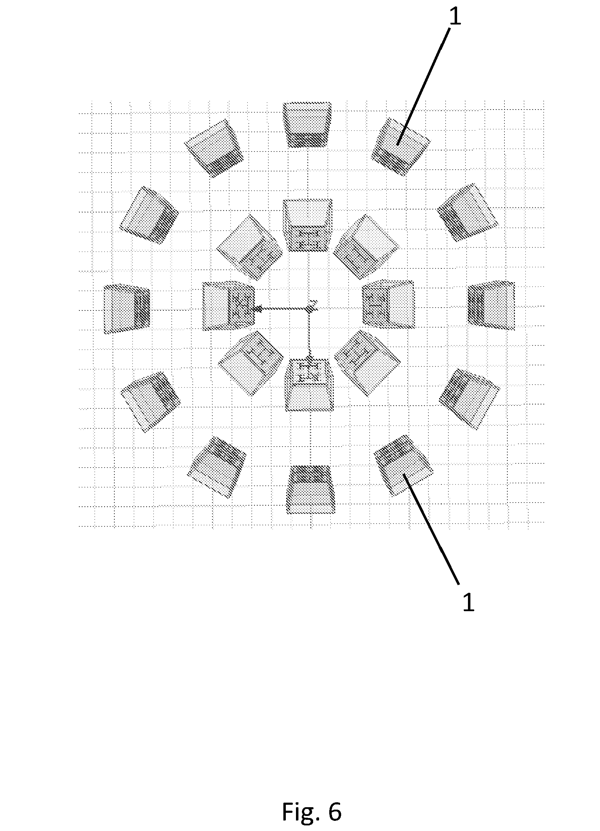

With reference to Figures 5 and 6, there is shown a non-limiting arrangement, comprising an antenna array that includes a plurality of antenna assemblies in accordance with the depicted arrangement of Figures 1 to 4. In this array there are provided 32 of the antenna assemblies, with 16 of the antenna assemblies arranged to transmit signals and 16 of the antenna assemblies arranged to receive signals. As stated, more or less of the antenna assemblies may be used in any such array, which may be modified in any manner as discussed herein.

The antenna assemblies are provided in an annular array. In alternative arrangements, they may be otherwise arranged. For example, they could be provided in a rectangular array, or otherwise.

The antenna assemblies forming the array will be mounted to a suitable support, subframe or substructure, which may take any suitable form and be appropriately tailored to the array to be supported thereby, as will be readily appreciated by those skilled in the art. In the depicted arrangement, a substantially annular support may be used.

The antennas may be arranged in a plurality of rows. In the present, non-limiting example, three rows of antenna assemblies are provided.

The antenna array is mounted via a three-axis gimbal for maintaining a substantially constant orientation of the antenna array during use.

The antenna assemblies and arrays comprising the antenna assemblies are used in a communications system. The communications system will typically comprise a plurality of vehicles, which comprise lighter than air vehicles, most preferably airships. It may include tens, hundreds, or even thousands of the airships.

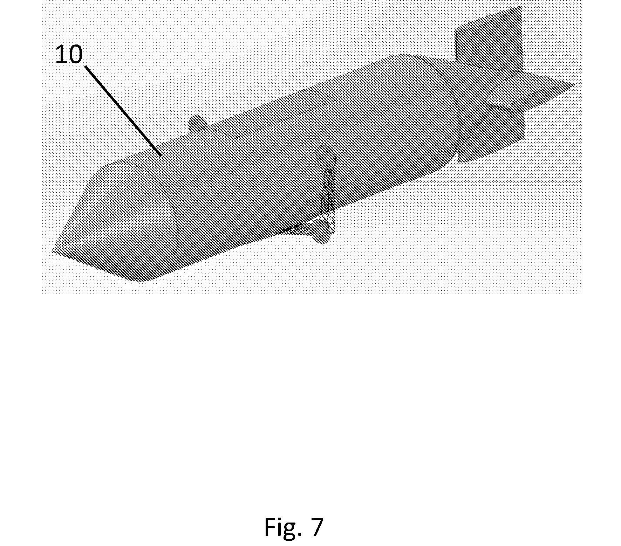

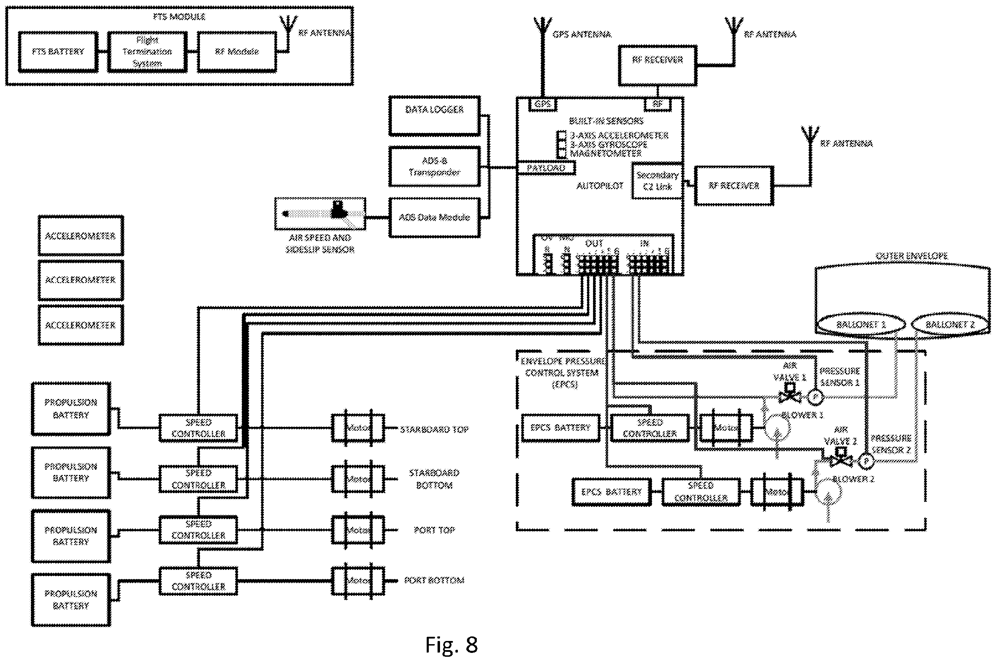

Figure 7 shows a perspective view of a non-limiting exemplary airship 10. The airship 10 is preferably semi-rigid. It preferably uses helium as the lifting gas. It preferably uses electric motors and propellers to control its direction of travel and a buoyancy control system to control its altitude, rate of climb and descent. Figure 8 shows an exemplary control system architecture for the airship 10, which includes a communications payload.

Each of the airships will be provided with an array of the antenna assemblies, as described above, the array forming part of the communications payload for providing a communications relay service with one or more ground stations. The antenna array will most preferably be configured, as discussed, to receive and transmit signals in one or more of the Kᵤ band, the Kₐ band, the C band, the K band, or the X band, and will be configured appropriately. It will most preferably be configured for receiving and transmitting signals in the Kᵤ band, initially. In use each of the airships will preferably be maintained at a substantially constant position at an altitude of 15km to 22km.

The communications payload may comprise a conventional geosynchronous orbit satellite transponder, appropriately configured to suit its use in the vehicle taking into account the desired operating height, and appropriate receipt and transmission frequencies and powers for mimicking of a 'bent-pipe' geosynchronous orbit satellite transponder at ground level.

The communications payload may comprise a converter which is arranged to change the frequency of received signals to a different frequency for onward transmission by the communications payload.

Such a converter may be beneficial for avoiding interference between received and transmitted signals and/or for mimicking the signal processing of a GEOSat.

The communications payload is preferably configured to transmit signals at a predetermined power level, such that when the signal reaches the receiver on the ground it has a power level equivalent to that of a signal received from a Geosynchronous Orbit Satellite.

This signal strength matching with GEOSats has several benefits. The signal is not of a strength to overpower signals from such satellites. Moreover, the ground station receives signals without distinction between signals received from GEOSats, LEOSats, or the vehicle of the present invention.

The communications payload may be configured to receive a signal at a first power level and to transmit the signal at a second power level that is lower than the first power level.

Since the received signal is travelling a far shorter distance to reach the vehicle than an equivalent signal received by GEOSats, the received signal at the vehicle has a greater signal strength. Accordingly, the communications payload may be arranged to transmit a signal at a reduced strength to the received signal, whilst matching the signal strength at the ground level of the transmitted signal of GEOSats at ground level.

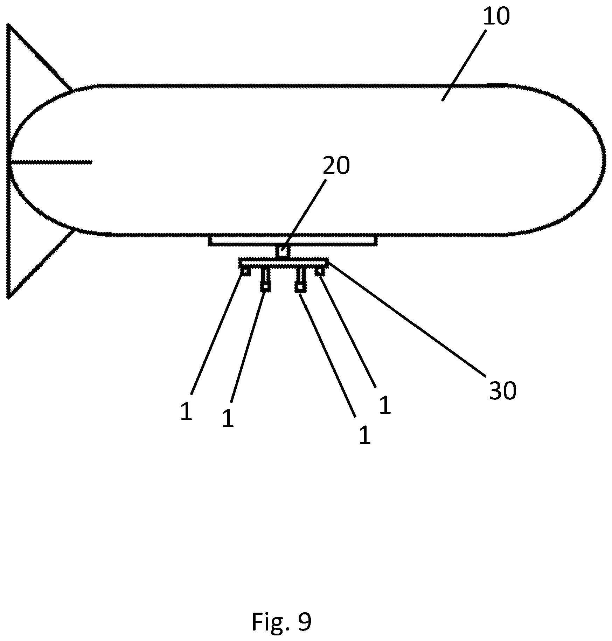

When the antenna array of the communications payload is mounted to the vehicle via a three-axis gimbal 20, as discussed above, and shown schematically in Figure 9, a substantially constant orientation of the antenna array relative to the ground station may be maintained. In Figure 9, the three-axis gimbal supports a support to which the antenna array is mounted. As discussed, the support may take various forms, as discussed above. In the present arrangement, the support is annular and supports an annular antenna array, although need not be limited as such. It should be noted that the schematic image of Figure 9, is not to scale.

Additionally, the communications payload is configured such that the ground transmit area covered by the vehicle can be modified by switching off one or more antennas of the array. Such an arrangement provides an effective means of reducing interference. For such purposes a control system is provided that is configured to independently switch on or off any of the antenna assemblies of the array, as desired.

A normal mission profile may involve one or more airships departing from one or more operating bases and climbing to the desired operating altitude. Once at the operating altitude, each airship will be positioned to the desired area of operation where it substantially maintains its altitude and position. During this time it will perform its commercial operations i.e. operating its communications payload, and providing the communications relay service in the desired band(s). The vehicle may be configured to maintain its substantially constant position for at least 12 hours. The vehicle may be configured to remain within 500m of a predetermined point in space.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

Although certain example embodiments of the invention have been described, the scope of the appended claims is not intended to be limited solely to these embodiments.

## Claims

1. A communications system comprising a lighter than air vehicle (10), which, in use, is maintained at a substantially constant position at an altitude of 15km to 22km, and comprises a communications payload, which comprises an array of antenna assemblies (1), for providing a communications relay service with a ground station,
wherein, each of the antenna assemblies (1) comprises a patch antenna (2) and a deflector (3) for reducing sidelobe gain of the patch antenna (2), the deflector (3) projecting from a plane of the patch antenna (2), comprising a plurality of sidewalls (8) and substantially surrounding the patch antenna (2),
wherein a three-axis gimbal (20) is provided for maintaining a substantially constant orientation of the antenna array during use, and
wherein a control means is provided, which is configured to independently switch on or off any of the antenna assemblies of the array.

2. A communications system as claimed in Claim 1, wherein the patch antenna of each of the antenna assemblies is mounted on a substrate, and the deflector is supported by and/or attached to the substrate.

3. A communications system as claimed in Claim 2, wherein the substrate comprises a printed circuit board.

4. A communications system as claimed in any preceding claim, wherein each of the one or more sidewalls of each of the antenna assemblies extends along a portion of a periphery of an area comprising all patches of the antenna, preferably wherein one or more of the sidewalls taper.

5. A communications system as claimed in any preceding claim, wherein adjacent sidewalls of each of the antenna assemblies are joined to one another or are spaced from one another.

6. A communications system as claimed in any preceding claim, wherein the deflector of each of the antenna assemblies projects from the plane of the patch antenna to an open mouth, and is substantially closed other than the open mouth.

7. A communications system as claimed in any preceding claim, wherein the patch antenna of each of the antenna assemblies has a rectangular profile and the deflector comprises four sidewalls.

8. A communications system as claimed in Claim 4 or any claim dependent thereon, wherein one or more of the sidewalls taper at an angle of 0 to 135 degrees.

9. A communications system as claimed in any preceding claim, wherein the patch antenna of each of the antenna assemblies has a surface area of less than 150x150 mm².

10. A communications system as claimed in any preceding claim, wherein the deflector of each of the antenna assemblies projects from the patch antenna, in a direction perpendicular to a plane of the patch antenna by 150mm or less.

11. A communications system as claimed in any preceding claim, wherein an inner surface of the deflector of each of the antenna assemblies is reflective or absorptive to signals in one or more of the Kᵤ band, the Kₐ band, the C band, the K band, or the X band.

12. A communications system according to any preceding claim, wherein each of the antenna assemblies is configured for receiving and/or transmitting signals in one or more of the Kᵤ band, the Kₐ band, the C band, the K band, or the X band.

13. A communications system according to any preceding claim, wherein the patch antenna of each of the antenna assemblies comprises a via-fed patch array antenna.

14. A communications system as claimed in any preceding claim, wherein a first plurality of the antenna assemblies of the array is configured to transmit signals and a second plurality of the antenna assemblies of the array is configured to receive signals.

15. A communications system as claimed in any preceding claim, wherein the antenna assemblies are mounted to an annular support to define an at least partially annular array of the antenna assemblies.

## Patentansprüche

1. Kommunikationssystem, umfassend ein Fahrzeug leichter als Luft (10), das in Verwendung in einer im Wesentlichen konstanten Position auf einer Höhe von 15 km bis 22 km gehalten wird und eine Kommunikationsnutzlast umfasst, die ein Array von Antennenbaugruppen (1) umfasst, zum Bereitstellen eines Kommunikationsrelaisdienstes mit einer Bodenstation,
wobei jede der Antennenbaugruppen (1) eine Patchantenne (2) und einen Deflektor (3) zum Reduzieren einer Nebenkeulenverstärkung der Patchantenne (2) umfasst, wobei der Deflektor (3) aus einer Ebene der Patchantenne (2) herausragt, eine Vielzahl von Seitenwänden (8) umfasst und die Patchantenne (2) im Wesentlichen umgibt,
wobei ein dreiachsiger Kardanring (20) zum Aufrechterhalten einer im Wesentlichen konstanten Ausrichtung des Antennenarrays während der Verwendung bereitgestellt wird, und
wobei ein Steuermittel bereitgestellt ist, das konfiguriert ist, um jede beliebige der Antennenbaugruppen des Arrays unabhängig voneinander ein- oder auszuschalten.

2. Kommunikationssystem nach Anspruch 1, wobei die Patchantenne jeder der Antennenbaugruppen auf einem Substrat montiert ist und der Deflektor durch das Substrat getragen wird und/oder an diesem befestigt ist.

3. Kommunikationssystem nach Anspruch 2, wobei das Substrat eine Leiterplatte umfasst.

4. Kommunikationssystem nach einem vorstehenden Anspruch, wobei sich jede der einen oder der mehreren Seitenwände jeder der Antennenbaugruppen entlang eines Abschnitts eines Umfangs eines Bereichs erstreckt, umfassend alle Patches der Antenne, vorzugsweise wobei sich eine oder mehrere der Seitenwände verjüngen.

5. Kommunikationssystem nach einem vorstehenden Anspruch, wobei angrenzende Seitenwände jeder der Antennenbaugruppen miteinander verbunden sind oder voneinander beabstandet sind.

6. Kommunikationssystem nach einem vorstehenden Anspruch, wobei der Deflektor jeder der Antennenbaugruppen von der Ebene der Patchantenne zu einer offenen Mündung herausragt und außer der offenen Mündung im Wesentlichen geschlossen ist.

7. Kommunikationssystem nach einem vorstehenden Anspruch, wobei die Patchantenne jeder der Antennenbaugruppen ein rechteckiges Profil aufweist und der Deflektor vier Seitenwände umfasst.

8. Kommunikationssystem nach Anspruch 4 oder einem davon abhängigen Anspruch, wobei sich eine oder mehrere der Seitenwände in einem Winkel von 0 bis 135 Grad verjüngen.

9. Kommunikationssystem nach einem vorstehenden Anspruch, wobei die Patchantenne jeder der Antennenbaugruppen einen Oberflächenbereich von weniger als 150x150 mm² aufweist.

10. Kommunikationssystem nach einem vorstehenden Anspruch, wobei der Deflektor jeder der Antennenbaugruppen von der Patchantenne in einer Richtung senkrecht zu einer Ebene der Patchantenne um 150 mm oder weniger herausragt.

11. Kommunikationssystem nach einem vorstehenden Anspruch, wobei eine innere Oberfläche des Deflektors jeder der Antennenbaugruppen für Signale in einem oder mehreren des Kᵤ-Bandes, des Kₐ-Bandes, des C-Bandes, des K-Bandes oder des X-Bandes reflektierend oder absorbierend ist.

12. Kommunikationssystem nach einem vorstehenden Anspruch, wobei jede der Antennenbaugruppen zum Empfangen und/oder Übertragen von Signalen in einem oder mehreren des Kᵤ-Bandes, des Kₐ-Bandes, des C-Bandes, des K-Bandes oder des X-Bandes konfiguriert ist.

13. Kommunikationssystem nach einem vorstehenden Anspruch, wobei die Patchantenne jeder der Antennenbaugruppen eine durchkontaktierungsgespeiste Patch-Array-Antenne umfasst.

14. Kommunikationssystem nach einem vorstehenden Anspruch, wobei eine erste Vielzahl der Antennenbaugruppen des Arrays konfiguriert ist, um Signale zu übertragen, und eine zweite Vielzahl der Antennenbaugruppen des Arrays konfiguriert ist, um Signale zu empfangen.

15. Kommunikationssystem nach einem vorstehenden Anspruch, wobei die Antennenbaugruppen an einem ringförmigen Träger montiert sind, um ein mindestens teilweises ringförmiges Array der Antennenbaugruppen zu definieren.

## Revendications

1. Système de communications comprenant un véhicule plus léger que l'air (10), qui, en cours d'utilisation, est maintenu à une position sensiblement constante à une altitude de 15 km à 22 km, et comprend une charge utile de communications, qui comprend un réseau d'ensembles antennes (1), permettant de fournir un service de relais de communications avec une station terrestre,
dans lequel, chacun des ensembles antennes (1) comprend une antenne à plaques (2) et un déflecteur (3) permettant de réduire le gain de lobe latéral de l'antenne à plaques (2), le déflecteur (3) faisant saillie à partir d'un plan de l'antenne à plaques (2), comprenant une pluralité de parois latérales (8) et entourant sensiblement l'antenne à plaques (2),
dans lequel un cardan à trois axes (20) est fourni pour le maintien d'une orientation sensiblement constante du réseau d'antennes pendant l'utilisation, et
dans lequel un moyen de commande est fourni, celui-ci étant configuré pour activer ou désactiver indépendamment l'un quelconque des ensembles antennes du réseau.

2. Système de communications selon la revendication 1, dans lequel l'antenne à plaques de chacun des ensembles antennes est montée sur un substrat, et le déflecteur est supporté par le substrat et/ou y est fixé.

3. Système de communications selon la revendication 2, dans lequel le substrat comprend une carte à circuit imprimé.

4. Système de communications selon l'une quelconque revendication précédente, dans lequel chacune parmi la ou les parois latérales de chacun des ensembles antennes s'étend le long d'une partie d'une périphérie d'une zone comprenant toutes les plaques de l'antenne, de préférence dans lequel une ou plusieurs des parois latérales s'effilent.

5. Système de communications selon l'une quelconque revendication précédente, dans lequel des parois latérales adjacentes de chacun des ensembles antennes sont jointes l'une à l'autre ou sont espacées l'une de l'autre.

6. Système de communications selon l'une quelconque revendication précédente, dans lequel le déflecteur de chacun des ensembles antennes fait saillie à partir du plan de l'antenne à plaques en une embouchure ouverte, et est sensiblement fermé en dehors de l'embouchure ouverte.

7. Système de communications selon l'une quelconque revendication précédente, dans lequel l'antenne à plaques de chacun des ensembles antennes a un profil rectangulaire et le déflecteur comprend quatre parois latérales.

8. Système de communications selon la revendication 4 ou l'une quelconque revendication dépendant de celle-ci, dans lequel une ou plusieurs des parois latérales s'effilent selon un angle de 0 à 135 degrés.

9. Système de communications selon l'une quelconque revendication précédente, dans lequel l'antenne à plaques de chacun des ensembles antennes a une superficie inférieure à 150x150 mm².

10. Système de communications selon l'une quelconque revendication précédente, dans lequel le déflecteur de chacun des ensembles antennes fait saillie de l'antenne à plaques, dans une direction perpendiculaire à un plan de l'antenne à plaques de 150 mm ou moins.

11. Système de communications selon l'une quelconque revendication précédente, dans lequel une surface interne du déflecteur de chacun des ensembles antennes est réfléchissante ou absorbante vis-à-vis de signaux dans une ou plusieurs parmi la bande Kᵤ, la bande Kₐ, la bande C, la bande K ou la bande X.

12. Système de communications selon l'une quelconque revendication précédente, dans lequel chacun des ensembles antennes est configuré pour la réception et/ou la transmission de signaux dans une ou plusieurs parmi la bande Kᵤ, la bande Kₐ, la bande C, la bande K ou la bande X.

13. Système de communications selon l'une quelconque revendication précédente, dans lequel l'antenne à plaques de chacun des ensembles antennes comprend une antenne de réseau à plaques alimentée par interconnexion.

14. Système de communications selon l'une quelconque revendication précédente, dans lequel une première pluralité des ensembles antennes du réseau est configurée pour transmettre des signaux et une seconde pluralité des ensembles antennes du réseau est configurée pour recevoir des signaux.

15. Système de communications selon l'une quelconque revendication précédente, dans lequel les ensembles antennes sont montés sur un support annulaire pour définir au moins partiellement un réseau annulaire des ensembles antennes.
